# EUROPÄISCHE PATENTSCHRIFT

(11) **EP 3 544 902 B1**
(45) Veröffentlichungstag und Bekanntmachung des Hinweises auf die Patenterteilung: **06.01.2021**
(21) Anmeldenummer: 17800500.5
(22) Anmeldetag: 14.11.2017
(51) Int. Cl.: B65D 41/18, B65D 41/26, B65D 47/12, G01F 19/00

(54) **FLASCHE MIT AUSGIESSER UND DOSIERBECHER**
BOTTLE WITH SPOUT AND METERING CUP
BOUTEILLE MUNIE D'UN BEC VERSEUR ET D'UN GODET DOSEUR

(30) Priorität: 22.11.2016 DE 102016223042
(43) Veröffentlichungstag der Anmeldung: 02.10.2019
(73) Patentinhaber: Henkel AG & Co. KGaA, 40589 Düsseldorf (DE)
(72) Erfinder: BORGER, Dannielle Paola, 6075 ED Herkenboosch (NL); GERHARDS, Katja, 40547 Düsseldorf (DE); BREISINGER, Julia, 40597 Düsseldorf (DE); RAMON, Willem, 3445 EW Woerden (NL); STEGEMAN, Gerrit Jan, 7245 NE Laren GLD (NL); ELLENKAMP-VAN OLST, Lenny Marita, 7004 DN Doetinchem (NL)
(86) Internationale Anmeldenummer: PCT/EP2017/079226
(87) Internationale Veröffentlichungsnummer: WO 2018/095765

(56) Entgegenhaltungen:
- EP-A2- 0 255 062
- US-A- 5 251 788
- US-A- 5 884 816
- US-A1- 2006 278 642

## Beschreibung

Die Erfindung betrifft eine Flasche, insbesondere eine Wasch- oder Spülmittelflasche, mit einem Ausgießer und einem Dosierbecher.

Aus dem Stand der Technik ist eine Wasch- oder Spülmittelflasche mit einem Flaschenhals bekannt, auf den sich der Ausgießer aufschrauben lässt, um eine kontrollierte Entnahme des Wasch- oder Spülmittels aus der Flasche zu ermöglichen. Bei abgeschraubtem Ausgießer lässt sich der Dosierbecher auf den Flaschenhals aufstecken. Der Dosierbecher, der einen Boden und eine Seitenwand aufweist, die sich vom Boden bis zu einem oberen, eine Becheröffnung begrenzenden Rand erstreckt, weist einen Rastnocken auf, der bei aufgestecktem Dosierbecher einen Rasthinterschnitt an dem Flaschenhals hintergreift. Dadurch ist der Dosierbecher sicher an der Flasche befestigt.

Wenn der Ausgießer jedoch auf den Flaschenhals aufgeschraubt ist, lässt sich der Dosierbecher nicht über die Rastverbindung von Rastnocken und Rasthinterschnitt an der Flasche befestigen und kann daher leichter verloren gehen. Zwar kann der Ausgießer vom Flaschenhals ohne weiteres abgeschraubt werden, doch das Auf- und Abschrauben des Ausgießers wird vom Nutzer als lästig empfunden. Zudem kann dann der Ausgießer leichter verloren gehen.

Aus der US 5251788 A ist ferner ein gattungsgemäßer Behälter mit einem aufgeschraubten Ausgießer bekannt, wobei auf den Ausgießer seinerseits eine Verschlusskappe aufgeschraubt ist. Somit lässt sich die Verschlusskappe ausschließlich auf dem zwischengeschalteten Ausgießer befestigen. Darüber hinaus lässt sich die Verschlusskappe im Grund nicht eigenständig handhaben, da für diesen Fall der Behälter im geöffneten Zustand verbleibt.

Weiterhin wird in der US 2006/0278642 A1 ein Behälter mit einer am Behälterhals verrasteten Ausgießhülse beschrieben, wobei an der Ausgießhülse seinerseits eine Verschlusskappe verschraubt werden kann. Trotz der vorhandenen Ausgießhülse ist hier die maßgenaue Abgabe definierter Produktmengen nur unzureichend möglich.

Überdies offenbart die EP 0255062 A2 einen Behälter mit einer Ausgießtülle sowie einem kombinierten Meßbecherverschluss. Dabei ist Ausgießtülle im Sinne einer möglichst materialschonenden Ausführung lediglich mittels des Meßbecherverschlusses am Behälter befestigt. Im Einzelnen ist der Meßbecherverschluss am Behälter verschraubt und klemmt dabei gleichzeitig die Ausgießtülle am Behälter fest. Auch hier ist der Meßbecherverschluss praktisch nicht eigenständig handhabbar, da in diesem Zustand der Behälter im geöffneten Zustand zurückbleibt.

Die US 5884816 A beschriebt schließlich einen Behälter mit einer auf die Behälteröffnung aufgeschraubten Dosiervorrichtung, die ihrerseits mit einer Kappe verschlossen ist. Eine solche Dosiervorrichtung ist recht aufwändig konstruiert und kann ausschließlich zusammen mit dem Behälter verwendet werden. Dies gestaltet sich vor allem bei großformatigen Behältern nicht unbedingt nutzerfreundlich.

Der Erfindung liegt daher die Aufgabe zu Grunde, eine Flasche mit Ausgießer und Dosierbecher zur Verfügung zu stellen, die eine einfache und problemlose Handhabung sowohl der Flasche als auch des Dosierbechers ermöglicht.

Die der Erfindung zu Grunde liegende Aufgabe wird mit der Merkmalskombination gemäß Anspruch 1 gelöst. Ausführungsbeispiele der Erfindung können den Unteransprüchen zu Anspruch 1 entnommen werden.

Bei der erfindungsgemäßen Flasche ist an dem Ausgießer und an dem Flaschenhals jeweils eine Rastvertiefung bzw. ein Rasthinterschnitt für den Rastnocken des Dosierbechers vorgesehen, sodass dieser entweder an dem Ausgießer oder direkt an dem Flaschenhals mittels Rastverbindung lösbar befestigt werden kann. Damit der Dosierbecher, unabhängig davon, ob der Ausgießer aufgeschraubt ist oder nicht, jeweils - mittelbar durch den Ausgießer oder unmittelbar - an dem Flaschenhals befestigt werden. Es ist nicht notwendig, zwecks Befestigung des Dosierbechers an dem Flaschenhals den Ausgießer vorher abzuschrauben. Dadurch können Ausgießer und Dosierbecher sicher aufbewahrt werden.

In einem Ausführungsbeispiel ist eine Verschlusskappe vorgesehen, durch die der Flaschenhals oder der Ausgießer dichtend abgeschlossen werden kann. Ist eine solche Verschlusskappe vorgesehen, muss der Dosierbecher keine dichtende Funktion erfüllen, was dessen Aufbau entsprechend vereinfacht. Die Verschlusskappe kann auf den Flaschenhals oder den Ausgießer aufgeschraubt oder aufgesteckt sein. Im letztgenannten Fall kann eine Rastverbindung zwischen Verschlusskappe und Flaschenhals bzw. zwischen Verschlusskappe und Ausgießer vorgesehen sein.

Auf den Flaschenhals der erfindungsgemäßen Flasche kann somit der Ausgießer aufgeschraubt sein, wobei der Flaschenhals ein Außengewinde und der Ausgießer ein Innengewinde aufweisen können. Auf den Ausgießer wiederum kann die Verschlusskappe aufgeschraubt sein, wobei der Ausgießer neben dem Innengewinde zur Befestigung an dem Flaschenhals ein Außengewinde aufweist, das mit einem Innengewinde der Verschlusskappe zusammenwirkt. Über die Verschlusskappe und zumindest teilweise über den Ausgießer kann dann der Dosierbecher gesteckt werden, bis der Rastnocken hinter den Rasthinterschnitt des Ausgießers einrastet. Wird auf den Ausgießer verzichtet, so wird die Verschlusskappe direkt auf den Flaschenhals geschraubt. Der über die Verschlusskappe und den Flaschenhals gesteckte Dosierbecher rastet mit dem Rastnocken hinter den Rasthinterschnitt am Flaschenhals ein.

Neben dem Rastnocken und dem Rasthinterschnitt, die im Folgenden auch als erster Rastnocken und als erster Rasthinterschnitt bezeichnet werden, kann an der Innenseite der Seitenwand ein zweiter Rastnocken zum Zusammenwirken mit einem zweiten Rasthinterschnitt des Ausgießers oder einem zweiten Rasthinterschnitt des Flaschenhalses vorgesehen sein. Vorzugsweise stehen sich dabei der erste Rastnocken und der zweite Rastnocken diametral gegenüber. Auf den Umfang der Seitenwand bezogen sind dann der erste Rastnocken und der zweite Rastnocken zueinander um 180° versetzt angeordnet.

Der Dosierbecher kann rotationssymmetrisch ausgebildet sein, wobei der Boden, soweit dieser eben ausgebildet ist, in diesem Fall die Form einer kreisrunden Scheibe aufweist. Der Boden kann auch uneben oder gewölbt sein. Er kann zudem eine nicht kreisrunde Grundform aufweisen. Beispielsweise kann der Boden ovalförmig sein. Der obere Rand des Dosierbechers kann im Wesentlichen die Form einer Ellipse aufweisen. Eine Länge einer Hauptachse der Ellipse kann 40 bis 150 mm, vorzugsweise 70 bis 90 mm betragen. Eine Länge einer Nebenachse der Ellipse kann 30 bis 130 mm, vorzugsweise 50 bis 70 mm betragen.

Die Seitenwand kann wie die Mantelfläche eines Zylinders ausgebildet sein, wobei die Stirnfläche des Zylinders kreisrund oder oval sein kann. Alternativ kann die Seitenwand auch mehrere Wandelemente aufweisen, wobei zwei benachbarte Wandelemente durch eine gemeinsame Kante verbunden sind. Bei einem rechteckigen Boden kann somit der Dosierbecher im Wesentlichen quaderförmig sein.

In einem bevorzugten Ausführungsbeispiel ist eine Fläche des Bodens kleiner als eine Querschnittsfläche der Becheröffnung des Dosierbechers. Wird ein kreisrunder ebener Boden unterstellt, so weist der Dosierbecher in diesem Ausführungsbeispiel die Form eines Kegelstumpfes auf, wobei sich ausgehend vom Boden die Seitenwand in Richtung zum oberen Rand öffnet. Das Verhältnis eines Durchmessers des Bodens zu einem Durchmesser der Becheröffnung kann 1:1 bis 1:10, vorzugsweise 1:1,5 bis 1:3 betragen. Wenn bei der Berechnung dieses Verhältnisses der Boden und/oder die Becheröffnung nicht kreisrund sind, so berechnen sich die Durchmesser anhand eines fiktiven Kreises, der die gleiche Fläche aufweist wie der Boden bzw. die Becheröffnung.

In der Seitenwand kann eine zum Innenraum gerichtete erste Mulde ausgebildet sein, die eine zum Innenraum gewandte Rückseite aufweist, an der der erste Rastnocken vorgesehen ist. Die erste Mulde kann sich dabei von dem Boden in Richtung des oberen Rand erstrecken, wobei eine Tiefe der Mulde von einem bodennahen Ende bis zu einem randnahen Ende ansteigen kann. Beispielsweise kann die maximale Tiefe der Mulde 2 bis 20 mm, vorzugsweise 5 bis 10 mm betragen. Eine Muldenbreite kann 5 bis 40 mm, vorzugsweise 12 bis 24 mm betragen.

An der Seitenwand kann wenigstens eine erste Griffzone vorgesehen sein, die bevorzugt in Umfangsrichtung der Seitenwand zum ersten Rastnocken versetzt angeordnet ist.

Zudem kann eine zweite Griffzone an der Seitenwand vorgesehen sei, die vorzugsweise der ersten Griffzone diametral gegenübersteht. Ein Ausführungsbeispiel sieht dabei vor, dass sich die zwei Rastnocken diametral gegenüberstehen (um 180° in Umfangsrichtung versetzt) und die beiden Griffzonen sich diametral gegenüberstehen (auch um 180° versetzt), wobei die Griffzone jeweils um 90° versetzt zu den Rastnocken angeordnet sind. Um beispielsweise einen mit dem Flaschenhals verrasteten Dosierbecher zu lösen, kann der Dosierbecher über die beiden sich gegenüberstehenden Griffzonen zusammengedrückt werden, wobei durch die damit einhergehende Verformung des Dosierbechers die Rastnocken leicht auseinandergedrückt werden und sich von den Rasthinterschnitten lösen.

Vorzugsweise ist der Dosierbecher aus Kunststoff, beispielsweise Polypropylen (PP) oder Polyethylen (PE). Der Dosierbecher kann einstückig aus einem Material sein oder auch aus mehreren Materialen. Beispielsweise kann der Rastnocken auf einem weicheren Material wie einem Elastomer, Silikon oder einem thermoplastischen Elastomer sein, so dass erhöhte Reibung zwischen Rastnocken und Rasthinterschnitt gegeben ist. Der Ausgießer und/oder der Flaschenhals, an dem sich einstückig ein Flaschengrundkörper anschließen kann, können aus einem härteren Material wie PP oder PE sein.

Die erste Griffzone kann eine Fingermulde in der Seitenwand umfassen. Die Fingermulde kann dabei so ausgebildet sein, dass sie die Kuppe eines Fingers aufnehmen kann. Die Fingermulde kann beispielsweise eine Tiefe von 2 bis 20 mm oder 5 bis 10 mm aufweisen und/oder eine Breite von 5 bis 40 mm oder 12 bis 24 mm aufweisen. Alternativ oder zusätzlich kann die Griffzone Oberflächenstrukturen umfassen, durch die der Dosierbecher griffiger wird und durch die dem Nutzer angezeigt wird, wie am besten der Dosierbecher gegriffen wird. Diese Oberflächenstrukturen können beispielsweise Noppen, Dellen, Rillen oder Rippen sein.

Die besonderen Ausführungen zu dem ersten Rastnocken, der ersten Mulde und der ersten Griffzone gelten sinngemäß für weitere Rastnocken, Mulden oder Griffzonen.

Durch die hier vorgenommene Beschreibung der Merkmale und Eigenschaften des Dosierbechers als Teil der erfindungsgemäßen Flasche ist auch ein Dosierbecher als solcher offenbart. Dieser Dosierbecher kann beispielsweise für die erfindungsgemäße Flasche verwendet werden.

Anhand der in den Figuren dargestellten Ausführungsbeispiele wird die Erfindung näher erläutert. Es zeigen:
- Figur 1: schematisch eine erfindungsgemäße Flasche mit Dosierbecher in einer Schnittansicht;
- Figur 2: die Flasche der Figur 1 in einer weiteren Schnittansicht;
- Figur 3: schematisch die Flasche der Figur 1 mit einem Ausgießer in der Schnittansicht gemäß Figur 1;
- Figur 4: die Flasche der Figur 3 in der Schnittansicht gemäß Figur 2;
- Figur 5: vergrößert den Dosierbecher der Figur 1 in der Schnittansicht gemäß Figur 1;
- Figur 6: vergrößert den Dosierbecher der Figur 1 in der Schnittdarstellung gemäß Figur 2; und
- Figur 7: den Dosierbecher in perspektivischer Ansicht.

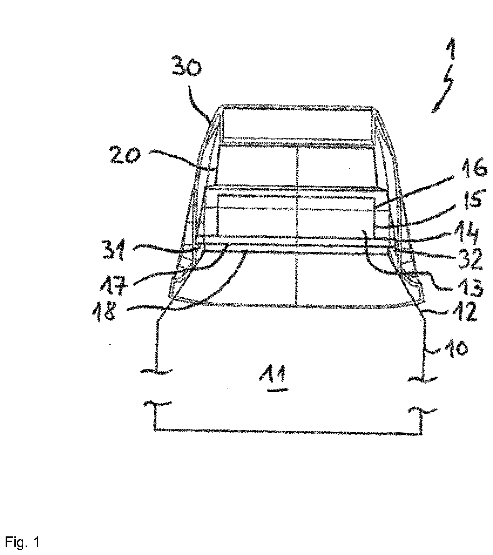

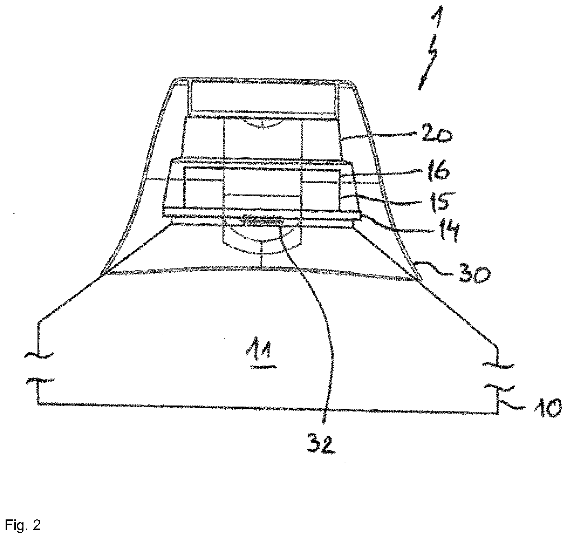

Die Figuren 1 und 2 zeigen eine in ihrer Gesamtheit mit 1 bezeichnete Flasche in verschiedenen Schnittansichten. Die Flasche 1 weist einen Flaschengrundkörper 10 auf, der nur teilweise oder in seiner Höhe gekürzten Form dargestellt ist. Der Flaschengrundkörper 10 begrenzt einen Flascheninnenraum 11 in dem sich ein schüttfähiges oder flüssiges Produkt wie beispielsweise ein flüssiges Waschmittel oder ein flüssiges Spülmittel befindet.

An den Flaschengrundkörper 10 schließt sich eine Flaschenschulter 12 an, die in einen Flaschenhals 13 mündet. Der Flaschenhals 13 umfasst einen umlaufenden Bund 14, über dem ein Hohlzylinderstück 15 mit einem Außengewinde 16 angeordnet ist.

Auf den Flaschenhals 13 ist eine Verschlusskappe 20 geschraubt, die mit einem Innengewinde ausgestattet ist, dass mit dem Außengewinde 16 des Flaschenhalses 13 in Eingriff steht.

Auf die Verschlusskappe 20 und den Flaschenhals 13 ist ein Dosierbecher 30 gesteckt. Der Dosierbecher 30 weist einen ersten Rastnocken 31 und einen zweiten Rastnocken 32 auf, die jeweils den umlaufenden Bund 14 hintergreifen. Der umlaufende Bund 14, der nicht notwendigerweise über den gesamten Umfang des Flaschenhalses 13 umlaufen muss, weist eine ringförmige, zum Flaschengrundkörper 10 gewandte Rastfläche 17 auf. Unterhalb des Bunds 14 schließt sich ein Absatz 18 an, dessen Außendurchmesser etwas kleiner ist als der Außendurchmesser des Bunds 14. Dadurch entsteht in radialer Richtung ein kleiner Überstand des Bundes 14 bezogen auf den Absatz 18. Der Überstand bildet einen Rasthinterschnitt für die Rastnocken 31, 32 aus.

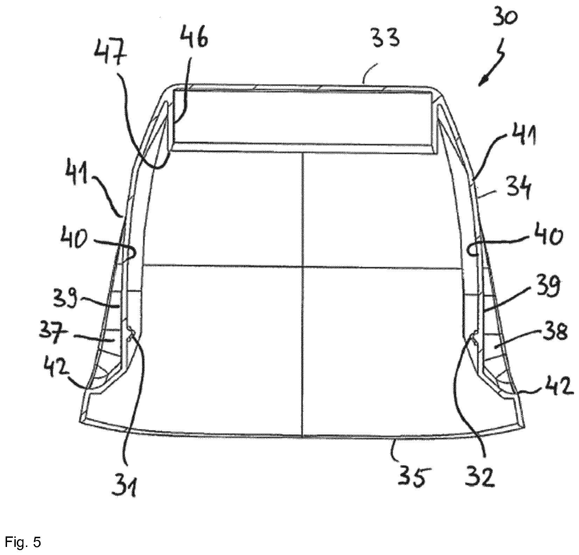

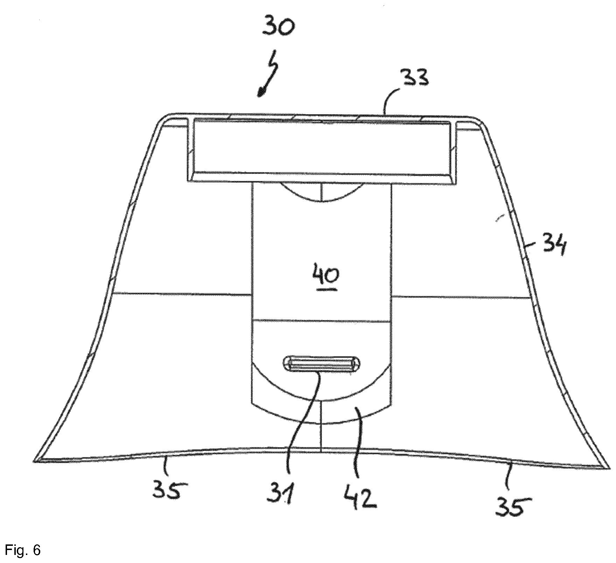

Bezüglich des Aufbaus des Dosierbechers 30 wird auf die Figuren 5 bis 7 verwiesen. Die Figuren 5 und 6 zeigen, in Analogie zu den Figuren 1 und 2, den Dosierbecher 30 in zwei verschiedenen Schnittdarstellungen, wobei die Schnittebenen der Figuren 5 und 6 im rechten Winkel zueinanderstehen. Der Dosierbecher 30 weist einen ovalförmigen ebenen Boden 33 auf, von dem sich eine Seitenwand 34 bis zu einem oberen Rand 35 erstreckt. Der obere Rand 35 ist wie der Boden 33 ovalförmig und begrenzt eine ebenfalls ovalförmige Becheröffnung 36. Da die Seitenwand 34 sich vom Boden 33 in einen kleinen Öffnungswinkel in Richtung des oberen Rand 35 erstreckt, ist eine Querschnittsfläche der Becheröffnung 36 größer als die Fläche des Bodens 33.

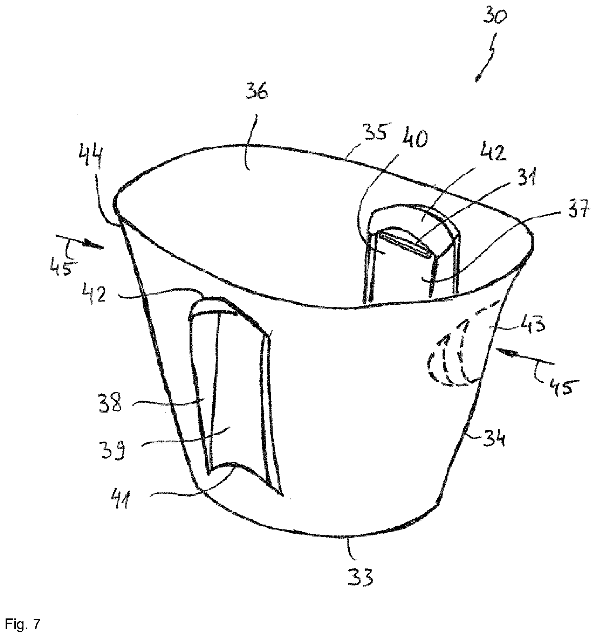

In Figur 7 ist der Dosierbecher in einer Stellung gezeigt, in der flüssiges Waschmittel oder Spülmittel von oben durch die Becheröffnung 36 in den Dosierbecher 30 gefüllt werden kann, um eine Dosierung der Menge vorzunehmen. Der Dosierbecher 30 weist dabei hier nicht dargestellte dosierte Markierungen auf. Die Begriffe Boden 33 und oberer Rand 35 beziehen sich auf die Figur 7 dargestellte Stellung des Dosierbechers 30. In den übrigen Figuren 1 bis 6 befindet sich der Dosierbecher 30 jeweils in einer umgedrehten Stellung, wie er auf den Flaschenhals 13 bzw. auf die Verschlusskappe 20 gesteckt wird.

Wie den Figuren 5 bis 7 in Zusammenschau entnommen werden kann, sind in der Seitenwand 34 eine erste Mulde 37 und eine zweite Mulde 38 ausgebildet. In der Darstellung der Figur 7 ist für die zweite Mulde 38 eine Vorderseite 39 zu erkennen, während für die erste Mulde 37 eine Rückseite 40 zu erkennen ist. Die Rückseite 40 der ersten Mulde 37 ist dabei zum Innenraum des Dosierbechers gewandt. Die zweite Mulde 38 erstreckt sich von einem bodennahen Ende 41 bis zu einem randnahen Ende 42. Das randnahe Ende 42 der ersten Mulde 37 ist in Figur 7 ebenfalls zu erkennen. Eine Tiefe der zweiten Mulde 38 ist am bodennahen Ende 41 nahezu null und wird zum randnahen Ende 42 größer.

Am Beispiel der ersten Mulde 37 wird deutlich, dass an der Rückseite 40 in der Nähe des randnahen Endes 42 der Rastnocken (hier der erste Rastnocken 31) ausgebildet ist. Der Rastnocken 31 steht dem in Figur 7 nicht zu sehenden zweiten Rastnocken 32 diametral gegenüber (vergleiche beispielsweise Figur 1, in der die Vorderseite 39 und die Rückseite 40 beider Mulden 37, 38 zu erkennen sind).

Gegenüber den Mulden 37, 38 um jeweils 90° in Umfangsrichtung verletzt sind eine erste Griffzone 43 und eine zweite Griffzone 44 vorgesehen, die in Figur 7 durch die gestrichelten Linien angedeutet sind (Figuren 5 und 6 zeigen ein Ausführungsbeispiel ohne Griffzonen). Wenn auf die Griffzonen 43, 44 ein Druck gemäß der Pfeile 45 ausgeübt wird, werden aufgrund der Form des Dosierbechers 30 und seiner Elastizität die Rastnocken 31, 32 auseinandergedrückt. Durch den Druck 45 lässt sich somit die den Bund 32 hintergreifende Stellung der Rastnocken 31, 32 aufheben, um den zuvor verrasteteten Dosierbecher 30 von dem Flaschenhals 13 annehmen zu können.

In Bodennähe ist ein umlaufender Steg 46 vorgesehen, der sich in Richtung der Becheröffnung 36 in den Innenraum des Dosierbechers 30 erstreckt. Der umlaufende Steg 46 bildet eine ringförmige Anlagefläche 47 aus, durch die eine vertikale Lage des Dosierbechers 30 bezogen auf den Flaschenhals 13 bzw. bezogen auf die Verschlusskappe 20 gegeben ist. Die Anlagefläche 47 liegt, wie dies den Figuren 1 und 2 zu entnehmen ist, auf der Verschlusskappe 20 auf.

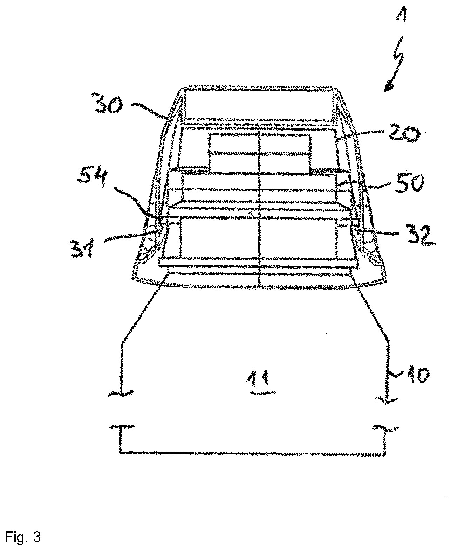

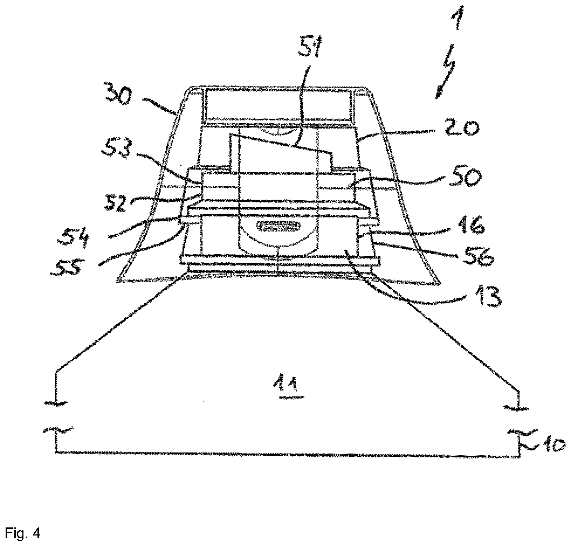

Die Figuren 3 und 4 zeigen die Flasche 1 zusätzlich mit einem Ausgießer 50. Der Ausgießer 50 umfasst eine Ausgusstülle 51 und ein die Ausgusstülle 51 radial umschließenden Hohlzylinderteil 52 mit einem daran angeformten Außengewinde 53.

Das Außengewinde 53 dient zur Befestigung der Verschlusskappe 30 an dem Ausgießer 50. Unterhalb dem Hohlzylinderteil 52 ist ein umlaufender Bund 54 vorgesehen, der eine zum Flaschengrundkörper 10 gewandte Rastfläche 55 aufweist. Dem Bund 54 schließt sich eine Schürze 56 an, die in einem Schürzeninnenraum ein Innengewinde (nicht dargestellt) aufweist. Dieses Innengewinde dient zur Verschraubung des Ausgießers 50 auf den Flaschenhals 13 mit seinem Außengewinde 16. Wie insbesondere der Figur 3 entnommen werden kann, greifen die Rastnocken 31, 32 des Dosierbechers 30 hinter den gegenüber der Schürze 56 überstehenden Bund 54. Für die sichere Aufbewahrung des Dosierbechers 30, nämlich befestigt an dem Flaschengrundkörper 10, ist es unerheblich, ob der Ausgießer 50 aufgeschraubt ist oder nicht.

### Bezugszeichenliste

- 1: Flasche
- 10: Flaschengrundkörper
- 11: Flascheninnenraum
- 12: Flaschenschulter
- 13: Flaschenhals
- 14: Bund
- 15: Hohlzylinderteil
- 16: Außengewinde
- 17: Rastfläche
- 18: Bund/Absatz
- 20: Verschlusskappe
- 30: Dosierbecher
- 31: erster Rastnocken
- 32: zweiter Rastnocken
- 33: Boden
- 34: Seitenwand
- 35: oberer Rand
- 36: Becheröffnung
- 37: erste Mulde
- 38: zweite Mulde
- 39: Vorderseite
- 40: Rückseite
- 41: bodennahes Ende
- 42: randnahes Ende
- 43: erste Griffzone
- 44: zweite Griffzone
- 45: Pfeil/Druck
- 46: Steg
- 47: Anlagefläche
- 50: Ausgießer
- 51: Ausgusstülle
- 52: Hohlzylinderteil
- 53: Außengewinde
- 54: Bund
- 55: Rastfläche
- 56: Schürze

## Patentansprüche

1. Flasche (1), insbesondere eine Wasch- oder Spülmittelflasche, mit einem Flaschenhals (13), einem Ausgießer (50), der an dem Flaschenhals (13) lösbar befestigbar ist, und mit einem Dosierbecher (30), der einen Boden (33) und eine Seitenwand (34) aufweist, die sich vom Boden (33) bis zu einem oberen Rand (35) erstreckt, der eine Becheröffnung (36) begrenzt, wobei an einer zum Innenraum des Dosierbechers (30) gewandte Innenseite der Seitenwand (34) ein erster Rastnocken (31) vorgesehen ist, **dadurch gekennzeichnet, dass** an dem Ausgießer (50) und an dem Flaschenhals (13) jeweils ein erster Rasthinterschnitt für den ersten Rastnocken (31) vorgesehen ist, so dass der Dosierbecher (30) mittels Rastverbindung lösbar entweder an dem Ausgießer (50) oder direkt an dem Flaschenhals (13) befestigbar ist.

2. Flasche (1) nach Anspruch 1, **dadurch gekennzeichnet, dass** eine Verschlusskappe (20) vorgesehen ist, durch die der Flaschenhals (13) oder der Ausgießer (50) dichtend abschließbar ist.

3. Flasche (1) nach Anspruch 1 oder 2, **dadurch gekennzeichnet, dass** an der Innenseite der Seitenwand (34) ein zweiter Rastnocken (32) zum Zusammenwirken mit einem zweiten Rasthinterschnitt des Ausgießers (50) oder einem zweiten Rasthinterschnitt des Flaschenhalses (13) vorgesehen ist.

4. Flasche (1) nach Anspruch 3, **dadurch gekennzeichnet, dass** der erste Rastnocken (31) und der zweite Rastnocken (32) sich diametral gegenüber stehen.

5. Flasche (1) nach einem der Ansprüche 1 bis 4, **dadurch gekennzeichnet, dass** der obere Rand (35) im Wesentlichen die Form einer Ellipse aufweist.

6. Flasche (1) nach einem der Ansprüche 1 bis 5, **dadurch gekennzeichnet, dass** eine Fläche des Bodens (33) kleiner ist als eine Querschnittsfläche der Becheröffnung (36).

7. Flasche (1) nach einem der Ansprüche 1 bis 6, **dadurch gekennzeichnet, dass** in der Seitenwand (34) eine zum Innenraum gerichtete erste Mulde (37) ausgebildet ist, die eine zum Innenraum gewandte Rückseite (40) aufweist, an der der erste Rastnocken (31) vorgesehen ist.

8. Flasche (1) nach Anspruch 7, **dadurch gekennzeichnet, dass** die erste Mulde (31) sich von dem Boden (33) in Richtung des oberen Rands (35) erstreckt, wobei eine Tiefe der ersten Mulde (37) von einem bodennahen Ende (41) bis zu einem randnahen Ende (42) ansteigt.

9. Flasche (1) nach einem der Ansprüche 1 bis 8, **dadurch gekennzeichnet, dass** wenigstens eine erste Griffzone (43) an der Seitenwand (34) vorgesehen ist, die in Umfangsrichtung der Seitenwand (34) zum ersten Rastnocken (31) versetzt angeordnet ist.

10. Flasche (1) nach Anspruch 9, **dadurch gekennzeichnet, dass** eine zweite Griffzone (44) an der Seitenwand (34) vorgesehen ist, die der ersten Griffzone (43) diametral gegenübersteht.

11. Flasche (1) nach Anspruch 9 oder 10, **dadurch gekennzeichnet, dass** die erste Griffzone (43) eine Fingermulde in der Seitenwand (34) umfasst.

## Claims

1. A bottle (1), in particular a detergent or dishwashing liquid bottle, comprising a bottle neck (13), a pouring spout (50) which can be detachably fastened to the bottle neck (13), and comprising a measuring cup (30) which has a base (33) and has a side wall (34) which extends from the base (33) to an upper rim (35) which delimits a cup opening (36), a first latching projection (31) being provided on an inner side of the side wall (34) facing the interior of the measuring cup (30), **characterized in that** a first latching undercut for the first latching projection (31) is provided on the pouring spout (50) and on the bottle neck (13) such that the measuring cup (30) can be detachably fastened either to the pouring spout (50) or directly to the bottle neck (13) by means of a latching connection.

2. The bottle (1) according to claim 1, **characterized in that** a closure cap (20) is provided, by means of which the bottle neck (13) or the pouring spout (50) can be sealingly locked.

3. The bottle (1) according to claim 1 or 2, **characterized in that** a second latching projection (32) for interacting with a second latching undercut of the pouring spout (50) or a second latching undercut of the bottle neck (13) is provided on the inner side of the side wall (34).

4. The bottle (1) according to claim 3, **characterized in that** the first latching projection (31) and the second latching projection (32) are diametrically opposite one another.

5. The bottle (1) according to one of claims 1 to 4, **characterized in that** the upper rim (35) is substantially elliptical.

6. The bottle (1) according to one of claims 1 to 5, **characterized in that** an area of the base (33) is smaller than a cross-sectional area of the cup opening (36).

7. The bottle (1) according to one of claims 1 to 6, **characterized in that** a first recess (37) directed toward the interior is formed in the side wall (34) and has a rear side (40) which faces the interior and on which the first latching projection (31) is provided.

8. The bottle (1) according to claim 7, **characterized in that** the first recess (31) extends from the base (33) toward the upper rim (35), a depth of the first recess (37) increasing from an end (41) near the base to an end (42) near the edge.

9. The bottle (1) according to one of claims 1 to 8, **characterized in that** at least one first grip zone (43) is provided on the side wall (34), which zone is offset in the circumferential direction of the side wall (34) relative to the first latching projection (31).

10. The bottle (1) according to claim 9, **characterized in that** a second grip zone (44) which is diametrically opposite the first grip zone (43) is provided on the side wall (34).

11. The bottle (1) according to claim 9 or 10, **characterized in that** the first grip zone (43) comprises a finger recess in the side wall (34).

## Revendications

1. Bouteille (1), en particulier bouteille de produit de lavage ou de rinçage, comportant un col de bouteille (13), un bec verseur (50) qui peut être fixé de manière amovible au col de bouteille (13), et un godet doseur (30) qui présente un fond (33) et une paroi latérale (34) qui s'étend depuis le fond (33) jusqu'à un bord supérieur (35), lequel bord supérieur délimite une ouverture de godet (36), un premier ergot d'encliquetage (31) étant prévu sur une face intérieure de la paroi latérale (34) orientée vers l'espace intérieur du godet doseur (30), **caractérisée en ce qu'**une première contre-dépouille d'encliquetage destinée au premier ergot d'encliquetage (31) est prévue respectivement sur le bec verseur (50) et sur le col du bouteille (13), de sorte que le godet doseur (30) peut être fixé de manière amovible par liaison d'encliquetage soit au bec verseur (50) soit directement au col de bouteille (13).

2. Bouteille (1) selon la revendication 1, **caractérisée en ce qu'**un bouchon de fermeture (20) est prévu, au moyen duquel le col de bouteille (13) ou le bec verseur (50) peut être fermé de manière étanche.

3. Bouteille (1) selon la revendication 1 ou 2, **caractérisée en ce qu'**un second ergot d'encliquetage (32) est prévu sur la face intérieure de la paroi latérale (34) pour coopérer avec une seconde contre-dépouille d'encliquetage du bec verseur (50) ou une seconde contre-dépouille d'encliquetage du col de bouteille (13).

4. Bouteille (1) selon la revendication 3, **caractérisée en ce que** le premier ergot d'encliquetage (31) et le second ergot d'encliquetage (32) sont diamétralement opposés.

5. Bouteille (1) selon l'une des revendications 1 à 4, **caractérisée en ce que** le bord supérieur (35) présente sensiblement la forme d'une ellipse.

6. Bouteille (1) selon l'une des revendications 1 à 5, **caractérisée en ce qu'**une surface du fond (33) est inférieure à une surface de section transversale de l'ouverture de godet (36).

7. Bouteille (1) selon l'une des revendications 1 à 6, **caractérisée en ce qu'**un premier creux (37) tourné vers l'espace intérieur est réalisé dans la paroi latérale (34), lequel premier creux présente une face arrière (40) orientée vers l'espace intérieur, sur laquelle est prévu le premier ergot d'encliquetage (31).

8. Bouteille (1) selon la revendication 7, **caractérisée en ce que** le premier creux (37) s'étend depuis le fond (33) en direction du bord supérieur (35), une profondeur du premier creux (37) s'agrandissant depuis une extrémité (41) proche du fond jusqu'à une extrémité (42) proche du bord.

9. Bouteille (1) selon l'une des revendications 1 à 8, **caractérisée en ce qu'**au moins une première zone de préhension (43) est prévue sur la paroi latérale (34), laquelle première zone de préhension est disposée de façon décalée par rapport au premier ergot d'encliquetage (31) dans la direction circonférentielle de la paroi latérale (34).

10. Bouteille (1) selon la revendication 9, **caractérisée en ce qu'**une seconde zone de préhension (44) est prévue sur la paroi latérale (34), laquelle seconde zone de préhension est diamétralement opposée à la première zone de préhension (43).

11. Bouteille (1) selon la revendication 9 ou 10, **caractérisée en ce que** la première zone de préhension (43) comprend un creux pour les doigts dans la paroi latérale (34).
